# EUROPEAN PATENT APPLICATION

(11) **EP 4 382 565 A1**
(43) Date of publication of application: **12.06.2024**
(21) Application number: 22853197.6
(22) Date of filing: 05.08.2022
(51) Int. Cl.: C08L 21/00, B60C 1/00, C08K 5/18, C08K 5/3437

(54) **TIRE RUBBER COMPOSITION, AND TIRE**

(30) Priority: 06.08.2021 JP 2021130350
(71) Applicant: BRIDGESTONE CORPORATION, Chuo-ku Tokyo 104-8340 (JP)
(72) Inventor: SAITO, Kosuke, Tokyo 104-8340 (JP)
(74) Representative: Marks & Clerk LLP
(86) International application number: PCT/JP2022/030187
(87) International publication number: WO 2023/013779

(57) **Abstract**

Provided is a rubber composition for a tire having excellent ozone resistance and high retention rates of elongation at break (EB) and tensile strength (TB) after aging. The rubber composition for a tire contains a rubber component, an amine age resistor represented by a specific general formula (1), and a quinoline age resistor. The content of the amine age resistor is 0.1 parts by mass to 11 parts by mass relative to 100 parts by mass of the rubber component, and the content of the quinoline age resistor is 0.1 parts by mass to 0.95 parts by mass relative to 100 parts by mass of the rubber component.

## Description

### TECHNICAL FIELD

The present disclosure relates to a rubber composition for a tire and also relates to a tire.

### BACKGROUND

Various rubber members that are constituents of tires typically degrade under the influence of an outdoor air environment, such as in the presence of ozone, and may experience the formation of cracks or the like as this degradation progresses. To address this problem, rubber compositions containing age resistors are typically adopted in various rubber members of tires.

For example, Patent Literature (PTL) 1 indicated below discloses that by adopting a rubber composition that is obtained by selecting and compounding a prescribed quinoline age resistor and N-phenyl-N'-(1,3-dimethylbutyl)-p-phenylenediamine (age resistor 6PPD) in rubber constituting the surface of a tire, it is possible to inhibit cracking and discoloration of the tire surface.

### CITATION LIST

### Patent Literature

PTL 1: WO2018/056384A1

### SUMMARY

### (Technical Problem)

However, since N-phenyl-N'-(1,3-dimethylbutyl)-p-phenylenediamine (age resistor 6PPD) that is used in PTL 1 may affect the environment, and also taking into account the possibility of regulation by future European legislation, it would be desirable to use an age resistor having lower environmental impact. Although the use of age resistor 6PPD in rubber compositions may be avoided in view of the above, studies conducted by the inventor have demonstrated that ozone resistance of a rubber composition decreases and durability (particularly elongation at break (EB) and tensile strength (TB)) of the rubber composition after aging also significantly decreases in a situation in which only a quinoline age resistor is used without using age resistor 6PPD.

Accordingly, the present disclosure addresses a problem of resolving the issue experienced by the conventional technique described above and providing a rubber composition for a tire having excellent ozone resistance and high retention rates of elongation at break (EB) and tensile strength (TB) after aging, even without using age resistor 6PPD.

Moreover, the present disclosure also addresses a problem of providing a tire having excellent ozone resistance and excellent durability after aging.

### (Solution to Problem)

Primary features of the present disclosure for resolving the problems set forth above are as follows.
[1] A rubber composition for a tire comprising:
   a rubber component;
   an amine age resistor represented by general formula (1), shown below, 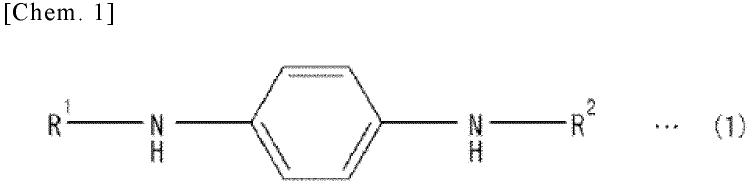 where, in general formula (1), R¹ and R² are each independently a monovalent saturated hydrocarbon group; and
   a quinoline age resistor, wherein
   content of the amine age resistor is 0.1 parts by mass to 11 parts by mass relative to 100 parts by mass of the rubber component, and
   content of the quinoline age resistor is 0.1 parts by mass to 0.95 parts by mass relative to 100 parts by mass of the rubber component.

   This rubber composition for a tire according to the present disclosure has excellent ozone resistance and high retention rates of elongation at break (EB) and tensile strength (TB) after aging.
[2] The rubber composition for a tire according to the foregoing [1], wherein the rubber component includes one or more selected from the group consisting of isoprene skeleton rubber, styrene-butadiene rubber, butadiene rubber, and chloroprene rubber.
   In this case, the rubber composition has excellent rubber elasticity, is more suitable for use in a tire, and the effects according to the present disclosure are evident.
[3] The rubber composition for a tire according to the foregoing [1] or [2], wherein the quinoline age resistor includes a polymer of 2,2,4-trimethyl-1,2-dihydroquinoline.
   In this case, the rubber composition has a high ozone resistance improvement effect and low tendency to discolor.
[4] The rubber composition for a tire according to any one of the foregoing [1] to [3], wherein R¹ and R² in general formula (1) are each independently a chain or cyclic monovalent saturated hydrocarbon group having a carbon number of 1 to 20.
   In this case, ozone resistance of the rubber composition further improves.
[5] The rubber composition for a tire according to any one of the foregoing [1] to [4], further comprising a wax, wherein content of the wax is 0.1 parts by mass to 5 parts by mass relative to 100 parts by mass of the rubber component.
   In this case, ozone resistance of the rubber composition further improves.
[6] A tire comprising a rubber member formed of the rubber composition for a tire according to any one of the foregoing [1] to [5].

This tire according to the present disclosure has excellent ozone resistance and excellent durability after aging.

### (Advantageous Effect)

According to the present disclosure, it is possible to provide a rubber composition for a tire having excellent ozone resistance and high retention rates of elongation at break (EB) and tensile strength (TB) after aging.

Moreover, according to the present disclosure, it is possible to provide a tire having excellent ozone resistance and excellent durability after aging.

### DETAILED DESCRIPTION

The following provides a detailed illustrative description of a rubber composition for a tire and a tire according to the present disclosure based on embodiments thereof.

Compounds described in the present specification may be partially or fully derived from fossil resources, biological resources such as plant resources, or recycled resources such as used tires. Moreover, these compounds may be derived from a mixture of two or more from among fossil resources, biological resources, and recycled resources.

### <Rubber composition for tire>

The rubber composition for a tire according to the present disclosure contains: a rubber component; an amine age resistor represented by general formula (1), shown below, 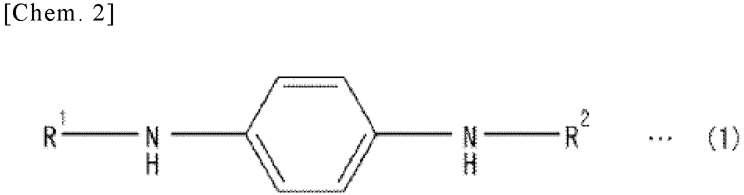 where, in general formula (1), R¹ and R² are each independently a monovalent saturated hydrocarbon group; and a quinoline age resistor. Features of the rubber composition for a tire according to the present disclosure are that the content of the amine age resistor is 0.1 parts by mass to 11 parts by mass relative to 100 parts by mass of the rubber component, and the content of the quinoline age resistor is 0.1 parts by mass to 0.95 parts by mass relative to 100 parts by mass of the rubber component.

By using an amine age resistor represented by general formula (1) and a quinoline age resistor together while also setting the content of the amine age resistor as 0.1 parts by mass or more relative to 100 parts by mass of the rubber component and setting the content of the quinoline age resistor as 0.1 parts by mass or more relative to 100 parts by mass of the rubber component in the rubber composition for a tire according to the present disclosure, it is possible to sufficiently ensure ozone resistance of the rubber composition and inhibit reduction of elongation at break (EB) and tensile strength (TB) of the rubber composition after aging.

As a consequence, the rubber composition for a tire according to the present disclosure has excellent ozone resistance and high retention rates of elongation at break (EB) and tensile strength (TB) after aging.

Moreover, by setting the content of the amine age resistor as 11 parts by mass or less relative to 100 parts by mass of the rubber component while also setting the content of the quinoline age resistor as 0.95 parts by mass or less relative to 100 parts by mass of the rubber component in the rubber composition for a tire according to the present disclosure, it is possible to suppress negative effects on rubber physical properties (heat generation properties, etc.) other than ozone resistance and make the rubber composition suitable for use in a tire.

Moreover, the amine age resistor represented by general formula (1) that is contained in the rubber composition for a tire according to the present disclosure is also advantageous in terms of being environmentally friendly as a result of R¹ and R² in general formula (1) each being a monovalent saturated hydrocarbon group.

### (Rubber component)

The rubber composition for a tire according to the present disclosure contains a rubber component that imparts rubber elasticity to the composition. The rubber component is preferably diene rubber, and is more preferably isoprene skeleton rubber, styrene-butadiene rubber (SBR), butadiene rubber (BR), or chloroprene rubber (CR). The isoprene skeleton rubber is rubber having isoprene units as a main skeleton and may, more specifically, be natural rubber (NR), synthetic isoprene rubber (IR), or the like. In a case in which the rubber component includes one or more selected from the group consisting of isoprene skeleton rubber, styrene-butadiene rubber, butadiene rubber, and chloroprene rubber, the rubber composition has excellent rubber elasticity and is more suitable for use in a tire. Moreover, in a case in which the rubber component includes one or more selected from the group consisting of isoprene skeleton rubber, styrene-butadiene rubber, butadiene rubber, and chloroprene rubber, the effects according to the present disclosure (effect of improving ozone resistance and effect of inhibiting reduction of elongation at break (EB) and tensile strength (TB) after aging through combined use of the amine age resistor and quinoline age resistor) are evident. The content ratio of diene rubber such as isoprene skeleton rubber, styrene-butadiene rubber, butadiene rubber, or chloroprene rubber in the rubber component is preferably 80 mass% or more, more preferably 90 mass% or more, and may be 100 mass%. The rubber component may be one type of rubber component used individually or may be a blend of two or more types of rubber components.

### (Amine age resistor)

The rubber composition for a tire according to the present disclosure contains an amine age resistor represented by general formula (1). The amine age resistor represented by general formula (1) includes a phenylenediamine moiety in the same manner as N-phenyl-N'-(1,3-dimethylbutyl)-p-phenylenediamine (age resistor 6PPD) but differs from age resistor 6PPD in terms that it does not include a double bond other than in the phenylenediamine moiety. The amine age resistor represented by general formula (1) acts to improve ozone resistance of the rubber composition and to inhibit reduction of retention rates of elongation at break (EB) and tensile strength (TB) of the rubber composition after aging.

In general formula (1), R¹ and R² are each independently a monovalent saturated hydrocarbon group. Although R¹ and R² may be the same or may be different from each other, it is preferable that R¹ and R² are the same from a synthetic viewpoint.

The carbon number of the monovalent saturated hydrocarbon group is preferably 1 to 20, more preferably 3 to 10, and particularly preferably 6 or 7. When the carbon number of the saturated hydrocarbon group is 20 or less, the amine age resistor has a larger age resistance effect due to the number of moles thereof per unit mass increasing, and thus ozone resistance of the rubber composition improves.

R¹ and R² in general formula (1) are preferably each independently a chain or cyclic monovalent saturated hydrocarbon group having a carbon number of 1 to 20 from a viewpoint of further improving ozone resistance of the rubber composition.

The monovalent saturated hydrocarbon group may be an alkyl group or a cycloalkyl group, where the alkyl group may be linear or branched, and the cycloalkyl group may further have an alkyl group or the like bonded thereto as a substituent.

Examples of the alkyl group include a methyl group, an ethyl group, an n-propyl group, an isopropyl group, an n-butyl group, an isobutyl group, a secbutyl group, a tert-butyl group, a 1,2-dimethylbutyl group, a 1,3-dimethylbutyl group, a 2,3-dimethylbutyl group, an n-pentyl group, an isopentyl group, a neopentyl group, a 1-methylpentyl group, a 2-methylpentyl group, a 3-methylpentyl group, a 4-methylpentyl group, a 1,2-dimethylpentyl group, a 1,3-dimethylpentyl group, a 1,4-dimethylpentyl group, a 2,3-dimethylpentyl group, a 2,4-dimethylpentyl group, a 3,4-dimethylpentyl group, an n-hexyl group, a 1-methylhexyl group, a 2-methylhexyl group, various octyl groups, various decyl groups, and various dodecyl groups, of which, a 1,4-dimethylpentyl group is preferable.

Examples of the cycloalkyl group include a cyclopentyl group, a methylcyclopentyl group, a cyclohexyl group, a methylcyclohexyl group, a cycloheptyl group, and a cyclooctyl group, of which, a cyclohexyl group is preferable.

The amine age resistor represented by general formula (1) may, more specifically, be N,N'-bis(1,4-dimethylpentyl)-p-phenylenediamine (age resistor 77PD), N,N'-bis(1-ethyl-3-methylpentyl)-p-phenylenediamine, N,N'-dicyclohexyl-p-phenylenediamine (age resistor CCPD), or the like, of which, N,N'-bis(1,4-dimethylpentyl)-p-phenylenediamine (age resistor 77PD) and N,N'-dicyclohexyl-p-phenylenediamine (age resistor CCPD) are preferable, and N,N'-bis(1,4-dimethylpentyl)-p-phenylenediamine (age resistor 77PD) is particularly preferable. The amine age resistor may be one type of amine age resistor used individually or may be two or more types of amine age resistors used in combination.

The content of the amine age resistor is 0.1 parts by mass to 11 parts by mass relative to 100 parts by mass of the rubber component. In a situation in which the content of the amine age resistor is less than 0.1 parts by mass relative to 100 parts by mass of the rubber component, ozone resistance of the rubber composition cannot be sufficiently ensured, and reduction of elongation at break (EB) and tensile strength (TB) of the rubber composition after aging cannot be sufficiently inhibited. Conversely, in a situation in which the content of the amine age resistor is more than 11 parts by mass relative to 100 parts by mass of the rubber component, negative effects on rubber physical properties (heat generation properties, etc.) other than ozone resistance increase, and the rubber composition becomes unsuitable for use in a tire. The content of the amine age resistor is preferably 0.5 parts by mass or more, and more preferably 1 part by mass or more relative to 100 parts by mass of the rubber component from a viewpoint of ozone resistance, and is preferably 10 parts by mass or less, and more preferably 8 parts by mass or less relative to 100 parts by mass of the rubber component from a viewpoint of effects on other rubber physical properties.

### (Quinoline age resistor)

The rubber composition for a tire according to the present disclosure contains a quinoline age resistor. The quinoline age resistor is an age resistor that includes a quinoline moiety or a moiety that is a derivative thereof (dihydroquinoline moiety, etc.). The quinoline age resistor acts to improve ozone resistance of the rubber composition and to inhibit reduction of retention rates of elongation at break (EB) and tensile strength (TB) of the rubber composition after aging.

The quinoline age resistor preferably includes a dihydroquinoline moiety, and more preferably includes a 1,2-dihydroquinoline moiety.

The quinoline age resistor may, more specifically, be a polymer of 2,2,4-trimethyl-1,2-dihydroquinoline (age resistor TMDQ), 6-ethoxy-2,2,4-trimethyl-1,2-dihydroquinoline, 6-anilino-2,2,4-trimethyl- 1,2-dihydroquinoline, or the like.

The quinoline age resistor preferably includes a polymer of 2,2,4-trimethyl-1,2-dihydroquinoline (age resistor TMDQ). A quinoline age resistor that includes a polymer of 2,2,4-trimethyl-1,2-dihydroquinoline has a high effect of improving ozone resistance of the rubber composition and is also advantageous in terms of having low tendency to cause discoloration of the rubber composition.

Note that the polymer of 2,2,4-trimethyl-1,2-dihydroquinoline may be a dimer, trimer, tetramer, or the like of 2,2,4-trimethyl-1,2-dihydroquinoline.

The content of the quinoline age resistor is 0.1 parts by mass to 0.95 parts by mass relative to 100 parts by mass of the rubber component. In a situation in which the content of the quinoline age resistor is less than 0.1 parts by mass relative to 100 parts by mass of the rubber component, ozone resistance of the rubber composition cannot be sufficiently ensured, and reduction of elongation at break (EB) and tensile strength (TB) of the rubber composition after aging cannot be sufficiently inhibited. Conversely, in a situation in which the content of the quinoline age resistor is more than 5 parts by mass relative to 100 parts by mass of the rubber component, negative effects on rubber physical properties (heat generation properties, etc.) other than ozone resistance increase, and the rubber composition becomes unsuitable for use in a tire. The content of the quinoline age resistor is preferably 0.3 parts by mass or more, and more preferably 0.5 parts by mass or more relative to 100 parts by mass of the rubber component from a viewpoint of ozone resistance, and is preferably 4 parts by mass or less, and more preferably 3 parts by mass or less relative to 100 parts by mass of the rubber component from a viewpoint of effects on other rubber physical properties.

### (Wax)

The rubber composition for a tire according to the present disclosure preferably further contains a wax. In a case in which the rubber composition contains a wax, ozone resistance of the rubber composition further improves.

The wax may be paraffin wax, microcrystalline wax, or the like, for example.

The content of the wax is preferably 0.1 parts by mass to 5 parts by mass relative to 100 parts by mass of the rubber component. When the content of the wax is 0.1 parts by mass or more relative to 100 parts by mass of the rubber component, ozone resistance of the rubber composition further improves. Moreover, when the content of the wax is 5 parts by mass or less relative to 100 parts by mass of the rubber component, there is little effect on rubber physical properties other than ozone resistance. The content of the wax is more preferably 0.5 parts by mass or more, and even more preferably 1 part by mass or more relative to 100 parts by mass of the rubber component from a viewpoint of ozone resistance, and is more preferably 4 parts by mass or less, and even more preferably 3 parts by mass or less relative to 100 parts by mass of the rubber component from a viewpoint of effects on other rubber physical properties.

### (Sulfur)

The rubber composition for a tire according to the present disclosure preferably contains sulfur. The inclusion of sulfur in the rubber composition enables vulcanization and improves durability (particularly elongation at break (EB) and tensile strength (TB)) of the rubber composition.

Although various types of sulfur can be used as the sulfur, normal sulfur (soluble sulfur (powdered sulfur), etc.) is preferable rather than insoluble sulfur, and oil treated sulfur or the like is also preferable. The insoluble sulfur referred to here is sulfur (amorphous polymeric sulfur) that is insoluble in carbon disulfide, whereas the soluble sulfur (powdered sulfur) referred to here is sulfur that is soluble in carbon disulfide.

The content of the sulfur is preferably within a range of 0.1 parts by mass to 10 parts by mass, and more preferably within a range of 1 part by mass to 5 parts by mass relative to 100 parts by mass of the rubber component. Durability of vulcanized rubber can be ensured when the content of the sulfur is 0.1 parts by mass or more relative to 100 parts by mass of the rubber component, whereas rubber elasticity can be sufficiently ensured when the content of the sulfur is 10 parts by mass or less relative to 100 parts by mass of the rubber component.

### (Other components)

Besides the rubber component, amine age resistor, quinoline age resistor, wax, and sulfur that have already been described, the rubber composition for a tire according to the present disclosure may, as necessary, contain various components typically used in the rubber industry that are selected as appropriate so as not to interfere with the object of the present disclosure. Examples of such components include fillers (silica, carbon black, calcium carbonate, etc.), silane coupling agents, softeners, processing aids, resins, surfactants, organic acids (stearic acid, etc.), zinc oxide (flowers of zinc), vulcanization accelerators, and vulcanizing agents other than sulfur. Commercial products can suitably be used as these compounding agents.

Note that the amine age resistor represented by general formula (1) may be mounted on any support. For example, the amine age resistor represented by general formula (1) may be mounted on an inorganic filler such as silica or calcium carbonate.

Moreover, the amine age resistor represented by general formula (1) may form a masterbatch together with a rubber component. The rubber component that is used to obtain the masterbatch is not specifically limited and may be diene rubber such as natural rubber (NR), or may be ethylene propylene diene rubber (EPDM) or the like.

Furthermore, the amine age resistor represented by general formula (1) may be in the form of a salt with an organic acid. The organic acid used to obtain the salt is not specifically limited and may be stearic acid or the like.

### (Production method of rubber composition)

No specific limitations are placed on the method by which the rubber composition is produced. For example, the rubber composition can be produced by compounding various components that are appropriately selected as necessary with the previously described rubber component, amine age resistor, and quinoline age resistor and performing kneading, warming, extrusion, etc. thereof. Moreover, the obtained rubber composition can be vulcanized to obtain vulcanized rubber.

No specific limitations are placed on conditions of the kneading, and various conditions such as the charge volume, rotor speed, ram pressure, and so forth of a kneading device, the kneading temperature, the kneading time, and the type of kneading device can be selected as appropriate depending on the object. The kneading device may be a Banbury mixer, an Intermixer, a kneader, a roller, or the like that is typically used in kneading of rubber compositions.

No specific limitations are placed on conditions of the warming, and various conditions such as the warming temperature, the warming time, and the warming device can be selected as appropriate depending on the object. The warming device may be a warming roller or the like that is typically used in warming of rubber compositions.

No specific limitations are placed on conditions of the extrusion, and various conditions such as the extrusion time, the extrusion rate, the extrusion device, and the extrusion temperature can be selected as appropriate depending on the object. The extrusion device may be an extruder or the like that is typically used in extrusion of rubber compositions. The extrusion temperature can be set as appropriate.

The device, method, conditions, and so forth by which vulcanization is performed are not specifically limited and can be selected as appropriate depending on the object. The device that performs vulcanization may be a machine that performs molding and vulcanization through a mold or the like that is typically used in vulcanization of rubber compositions. As a condition of the vulcanization, the temperature thereof may be approximately 100°C to 190°C, for example.

### <Tire>

A feature of a tire according to the present disclosure is that it includes a rubber member formed of the rubber composition for a tire set forth above. The tire according to the present disclosure has excellent ozone resistance and excellent durability after aging as a result of including a rubber member that is formed of the rubber composition for a tire. Moreover, the tire according to the present disclosure is also advantageous in terms of being environmentally friendly.

The rubber member for which the rubber composition for a tire set forth above is adopted may suitably be side rubber, tread rubber, an inner liner, or the like that constitutes a tire surface. Note that the rubber member for which the rubber composition for a tire set forth above is adopted may alternatively be a rubber member that constitutes an inner part of the tire. Such a rubber member may be a bead filler, a carcass, coating rubber of a reinforcing member such as a belt, or the like.

Depending on the type of tire intended for use, the tire according to the present disclosure may be obtained by first forming a tire using an unvulcanized rubber composition and then vulcanizing the tire, or by first forming a tire using semi-vulcanized rubber yielded by a preliminary vulcanization process or the like and then fully vulcanizing the tire. The tire according to the present disclosure is preferably a pneumatic tire. The gas filling the pneumatic tire may be ordinary air or air with an adjusted partial pressure of oxygen, or may be an inert gas such as nitrogen, argon, or helium.

### EXAMPLES

The following describes the present disclosure in more detail through Examples. However, the present disclosure is not in any way limited by the following Examples.

### <Example 3>

### (Production of rubber composition)

A rubber composition was produced in accordance with a formulation indicated in Table 1. The amounts of age resistors that were used are indicated in Table 2.

**[Table 1]**

| | Amount (parts by mass) |
|---|---|
| NR *1 | 35 |
| SBR *2 | 77 |
| Silica *3 | 58 |
| Carbon black *4 | 6 |
| Wax *5 | 1.7 |
| Age resistor 77PD *6 | Separate table |
| Age resistor TMDQ *7 | |
| Age resistor 6PPD *8 | |
| Sulfur *9 | 2.0 |
| Other chemicals * 10 | 24.5 |

| | |
|---|---|
| *1 NR: Natural rubber *2 SBR: Styrene-butadiene rubber (total amount of SBR-1 (styrene-butadiene rubber: bound styrene content = 20 mass%; vinyl bond content of butadiene portion = 55 mass%; glass-transition temperature (Tg) = -40°C) and SBR-2 (oil extended rubber of styrene-butadiene rubber; bound styrene content = 45 mass%; vinyl bond content of butadiene portion = 19 mass%; glass-transition temperature (Tg) = -30°C); inclusive of 12 parts by mass of oil extension component) *3 Silica: Nipsil AQ (product name) produced by Tosoh Silica Corporation *4 Carbon black: Asahi #78 (product name) produced by Asahi Carbon Co., Ltd. *5 Wax: Microcrystalline wax, total amount of OZOACE 0701 (product name) produced by Nippon Seiro Co., Ltd. and OZOACE 0301 (product name) produced by Nippon Seiro Co., Ltd. *6 Age resistor 77PD: Amine age resistor for which R¹ and R² in general formula (1) are saturated hydrocarbon groups (1,4-dimethylpentyl groups), N,N'-bis(1,4-dimethylpentyl)-p-phenylenediamine, Santoflex 77PD (product name) produced by Eastman Chemical Company *7 Age resistor TMDQ: Quinoline age resistor, 2,2,4-trimethyl-1,2-dihydroquinoline polymer *8 Age resistor 6PPD: N-phenyl-N'-(1,3-dimethylbutyl)-p-phenylenediamine, ANTIGENE 6C (product name) produced by Sumitomo Chemical Co., Ltd. *9 Sulfur: HK200-5 (product name) produced by Hosoi Chemical Industry Co., Ltd., 5% oil * 10 Other chemicals: Total amount including at least silane coupling agent (bis(triethoxysilylpropyl)polysulfide, ABC-856 (product name) produced by Shin-Etsu Chemical Co., Ltd.), stearic acid (Kirijirushi Stearic Acid (product name) produced by NOF Corporation), zinc oxide produced by Hakusui Tech Co., Ltd., SANCELER CM-G (product name) produced by Sanshin Chemical Industry Co., Ltd., and MS-95 (product name) produced by Kao Corporation | |

### (Evaluation of rubber composition)

Ozone resistance and retention rates of elongation at break (EB) and tensile strength (TB) after aging were evaluated for the obtained rubber composition by the following methods. The results are shown in Table 2.

### (1) Retention rates of elongation at break (EB) and tensile strength (TB) after aging

The rubber composition was vulcanized to prepare a vulcanized rubber test specimen. The test specimen was subjected to a tensile test in accordance with JIS K 6251 straight after production to measure the initial elongation at break (EB) and tensile strength (TB).

Next, the vulcanized rubber test specimen was left at 100°C for 24 hours to cause aging, and the test specimen after aging was subjected to a tensile test in accordance with JIS K 6251 to measure the elongation at break (EB) and tensile strength (TB) after aging.

Retention rates of elongation at break (EB) and tensile strength (TB) after aging were calculated in accordance with the following formulae using the initial elongation at break (EB) and tensile strength (TB) and also the elongation at break (EB) and tensile strength (TB) after aging. Retention rate of elongation at break (EB) after aging = Elongation at break (EB) after aging/Initial elongation at break (EB) × 100(%) Retention rate of tensile strength (TB) after aging = Tensile strength (TB) after aging/Initial tensile strength (TB) × 100(%)

### (2) Ozone resistance

A dynamic ozone degradation test (test in which strain is repeatedly applied) and a static ozone degradation test (test in which specimen is left with constant strain applied) were performed in accordance with JIS K 6259-1 to evaluate ozone resistance. An evaluation was made by performing ranking according to the number of cracks and making a classification by the following criteria A to C and also by performing ranking according to the size and depth of cracks and making a classification by the following criteria 1 to 5.

### --Ranking according to number of cracks--

A: Small number of cracks
B: Large number of cracks
C: Countless cracks

### --Ranking according to size and depth of cracks--

1: Cracks not visible to naked eye but observable under × 10 magnifying glass
2: Cracks visible to naked eye
3: Deep and relatively large cracks (less than 1 mm)
4: Deep and large cracks (not less than 1 mm and less than 3 mm)
5: Cracks of 3 mm or more or specimen likely to split

### <Comparative Examples 1 to 3 and Examples 1, 2, and 4>

Rubber compositions are produced in accordance with formulations indicated in Tables 1 and 2, and then ozone resistance and retention rates of elongation at break (EB) and tensile strength (TB) after aging are evaluated by the methods described above.

### <Evaluation of heat generation properties>

An ARES-G2 (produced by TA Instruments) is used to measure tan δ (50°C) of each vulcanized rubber (cylindrical shape, ∅ = 8 mm, height = 6 mm) under conditions of a shear strain rate of 10%, a frequency of 15 Hz, and a temperature of 50°C.

An evaluation result for tan δ (50°C) of each vulcanized rubber is indicated in the "Heat generation properties" row as an index value with tan δ (50°C) of a reference example (Comparative Example 1) set as 100.

A lower index value for heat generation properties indicates better rolling performance (low rolling resistance).

**[Table 2]**

| | | | | Comparative Example 1 | Comparative Example 2 | Example 1 | Example 2 | Example 3 | Comparative Example 3 | Example 4 |
|---|---|---|---|---|---|---|---|---|---|---|
| Amounts of age resistors | Age resistor 77PD *6 | | Parts by mass | 1 | - | 1 | 1 | 3.04 | 1 | 8 |
| | Age resistor TMDQ *7 | | | - | 0.5 | 0.2 | 0.5 | 0.72 | 1.1 | 0.85 |
| | Age resistor 6PPD *8 | | | - | 1 | - | - | - | - | - |
| Evaluation results | EB retention rate after aging | | % | 61 | 63 | 73 | 74 | 77 | 78 | 77 |
| | TB retention rate after aging | | % | 65 | 67 | 84 | 90 | 92 | 93 | 92 |
| | Ozone resistance | Dynamic ozone degradation test | - | B-3 | B-3 | B-2 | B-2 | B-2 | B-2 | B-1 |
| | | Static ozone degradation test | - | B-4 | B-4 | B-4 | B-4 | B-4 | B-4 | B-3 |
| | Heat generation properties | | Index value | 100 | 104 | 102 | 104 | 105 | 113 | 105 |

It can be seen from Table 2 that in the Examples in which the content of an amine age resistor represented by general formula (1) is 0.1 parts by mass to 11 parts by mass relative to 100 parts by mass of a rubber component and the content of a quinoline age resistor is 0.1 parts by mass to 0.95 parts by mass relative to 100 parts by mass of the rubber component, excellent ozone resistance and high retention rates of elongation at break (EB) and tensile strength (TB) after aging are achieved even without using age resistor 6PPD. Moreover, it can be seen from Comparative Example 3 that heat generation properties deteriorate in a situation in which the content of a quinoline age resistor exceeds 0.95 parts by mass relative to 100 parts by mass of a rubber component.

## Claims

1. A rubber composition for a tire comprising:
a rubber component;
an amine age resistor represented by general formula (1), shown below, 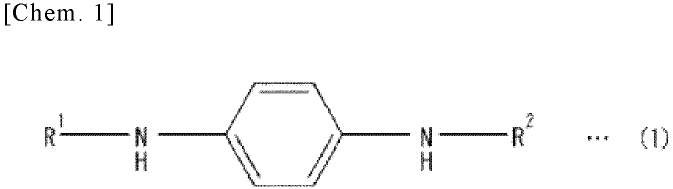 where, in general formula (1), R¹ and R² are each independently a monovalent saturated hydrocarbon group; and
a quinoline age resistor, wherein
content of the amine age resistor is 0.1 parts by mass to 11 parts by mass relative to 100 parts by mass of the rubber component, and
content of the quinoline age resistor is 0.1 parts by mass to 0.95 parts by mass relative to 100 parts by mass of the rubber component.

2. The rubber composition for a tire according to claim 1, wherein the rubber component includes one or more selected from the group consisting of isoprene skeleton rubber, styrene-butadiene rubber, butadiene rubber, and chloroprene rubber.

3. The rubber composition for a tire according to claim 1 or 2, wherein the quinoline age resistor includes a polymer of 2,2,4-trimethyl-1,2-dihydroquinoline.

4. The rubber composition for a tire according to claim 1, wherein R¹ and R² in general formula (1) are each independently a chain or cyclic monovalent saturated hydrocarbon group having a carbon number of 1 to 20.

5. The rubber composition for a tire according to claim 1, further comprising a wax, wherein content of the wax is 0.1 parts by mass to 5 parts by mass relative to 100 parts by mass of the rubber component.

6. A tire comprising a rubber member formed of the rubber composition for a tire according to claim 1.
